# EUROPEAN PATENT SPECIFICATION

(11) **EP 2 065 877 B1**
(45) Date of publication and mention of the grant of the patent: **05.12.2012**
(21) Application number: 06798402.1
(22) Date of filing: 28.09.2006
(51) Int. Cl.: G09G 3/00

(54) **IMAGE PROJECTION SYSTEM BY MEANS OF DIRECT CURRENT TYPE HIGH VOLTAGE DISCHARGE LAMP**
BILDPROJEKTIONSSYSTEM MITTELS EINER HOCHSPANNUNGSENTLADUNGSLAMPE DES GLEICHSTROMTYPS
SYSTÈME DE PROJECTION D'IMAGE AU MOYEN D'UNE LAMPE À DÉCHARGE HAUTE TENSION DE TYPE COURANT CONTINU

(43) Date of publication of application: 03.06.2009
(73) Proprietor: Phoenix Electric Co., Ltd., Hyogo 679-2122 (JP)
(72) Inventor: FUJII, Toshitaka, Hyogo 679-2122 (JP); NAKAGAWA, Atsuji, Hyogo 679-2122 (JP)
(74) Representative: Scaddan, Gareth Casey
(86) International application number: PCT/JP2006/319354
(87) International publication number: WO 2008/038382

(56) References cited:
- EP-A- 0 605 248
- EP-A- 1 565 007
- WO-A-02/063391
- JP-A- 05 113 604
- JP-A- 07 225 364
- JP-A- 09 054 267
- JP-A- 11 239 359
- JP-A- 2005 049 362

## Description

### Technical Field

The present invention relates to an image projection system equipped with an optical element and a color filter.

### Background Art

An image projection system is a system for extracting, e.g., the three primary colors (i.e., R (red), G (green), and B (blue)) in a time-division manner by applying light to a color filter which rotates at a high speed, forming an image pattern using a reflective type optical element called a digital micromirror device (hereinafter referred to as a "DMD"),` and projecting a color image onto a screen through a projection lens system and is used for a home theater, an RPTV (rear projection TV), and the like.

High-intensity discharge lamps used as light sources of image projection systems are classified according to their driving current waveforms into two types: one (AC system) which is lighted by a square-wave alternating current and the other (DC system) which is lighted by a direct current. Initial systems were mostly AC systems, and simple color filters composed only of the three primary colors of R, G, and B were common.

It is important to vary the tone of a projected color image to suit user preferences. In this relation, for example, Patent Document 1 discloses an image projection device capable of freely varying a tone by varying an output power used to drive a light source according to a particular color (R, G, B) in an image projection system including a color filter whose color segments are composed of three types (R, G, B) (note that examples all use an AC light source).

The above-described process of controlling the magnitude of a driving current of a high-pressure discharge lamp in synchronism with a particular color segment in an image projection system including a digital optical element such as a DMD is attracting attention as a technique capable of giving abundant powers of expression such as adjusting a tone to a reproducible tone or representing, e.g., bright red to suit user preferences.

Patent Document 1
   National Publication of International Patent Application No. 1996-505031
A frame sequential color display projection system is described in WO-A-02/063391, and includes an arc lamp having a predetermined power rating for providing a source of polychromatic light that propagates through a color wheel that sequentially provides R, G, B, and optionally, W light colors during respective sequential time periods. A display controller is synchronized with the color wheel to generate color image data during the respective time periods. A light valve, such as a DMD, receives the color image data for generating the frame sequential color display. A lamp ballast is also synchronized with the color wheel to provide nominal and boosted power levels to the arc lamp during selected ones of the time periods such that the projector provides a brighter, color-adjusted display without requiring the arc lamp to operate at an average power level exceeding its predetermined power rating.
An apparatus for correcting a color error is described in EP-A-1 565 007 which includes a color wheel having a CWIM marked thereon, a motor for rotating the color wheel, a motor driver for controlling a driving of the motor, a CWIM sensor for sensing the CWIM to generate a CWIM sensing signal, and a controller for setting a leading edge of the CWIM sensing signal as a reference location and controlling the motor driver to adjust a phase difference between the CWIM sensing signal and a synchronization signal of an image signal.
A metal halide discharge lamp is described in EP-A-0 605 248 which is operated from a D.C. power source, and which is suitable for an optical light source.

### Disclosure of the Invention

### Problems to be Solved by the Invention

An electrode unit of a high-pressure discharge lamp has a cathode which emits electrons and an anode which receives electrons emitted from the cathode. Since electrons accelerated by an electric field collide with each other in the anode, the anode is heated to a high temperature and wastes due to evaporation. Since the polarity changes at fixed intervals in an AC high-pressure discharge lamp, a cathode and an anode periodically replace each other. As a result, both the electrodes waste.

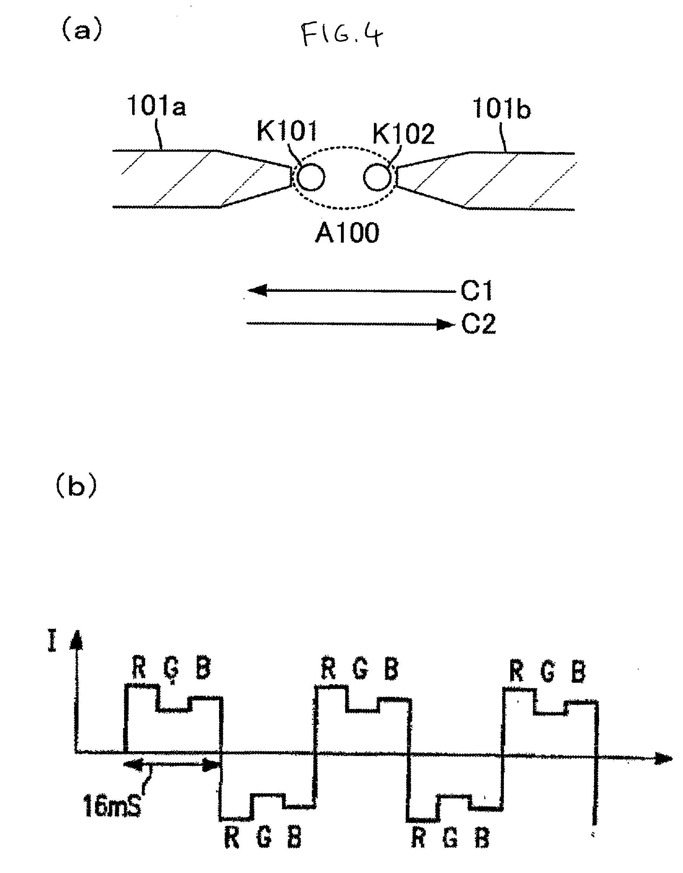

Figure 4(a) shows states of electrode structures 101a and 101b of a general AC high-pressure discharge lamp and an arc discharge A100. As shown in Figure 4(a), in the case of an AC system, two electrodes are designed to be of the same shape and the same size such that the electrodes waste uniformly. The direction of an AC lamp current switches to the opposite direction when the cycle switches between a positive half cycle and a negative half cycle. For example, assuming that the direction of the current is as indicated by an arrow C1 in the positive half cycle, reference characters 101a denote the cathode during the cycle, and reference characters 101b denote the anode. At this time, since an arc spot occurs in the vicinity of the cathode, an arc spot appears near K101. The direction of the current in the negative half cycle is as indicated by an arrow C2, reference characters 101b denote the cathode, and reference characters 101a denote the anode. An arc spot appears near K102.

In order to make waste in an electrode unit as uniform as possible and prevent the life characteristics of an AC high-pressure discharge lamp from deteriorating, it is necessary to make adjustments such that average powers supplied to a light source are equal on the plus side and on the minus side. If the waveform of a current inputted to the high-pressure discharge lamp is operated by changing the magnitude of a driving current for each segment to obtain abundant powers of expression, it is difficult to maintain the symmetry of the current waveform.

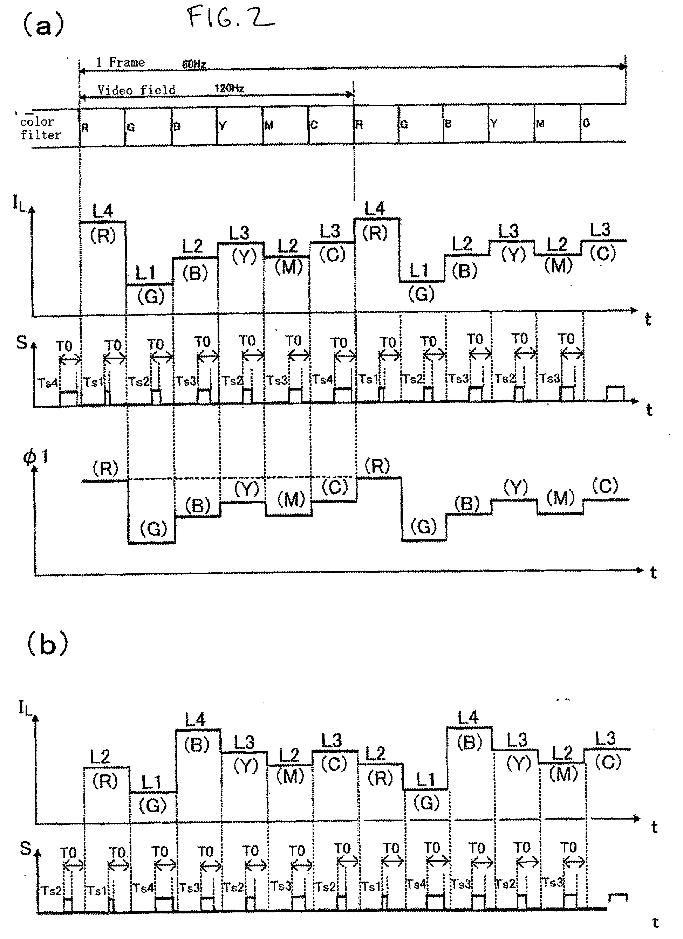

For example, Figure 4(b) shows an example in which, in an AC image projection device, a driving current of a light source is varied such that "the amplitude of red pulses (both positive and negative pulses) is larger than that of blue pulses, and the amplitude of blue pulses is larger than that of green pulses" (see Figure 2b of Patent Document 1 described above). To realize such a driving current waveform, each color segment and a driving current need to be appropriately synchronized, and the realization is extremely difficult. Note that "the detailed description of the invention" of Patent Document 1 only describes that "... must operate ... in order that the power in the positive pulses equal the power in the negative pulses", and a specific method for forming a synchronization signal and the like are unclear.

Since, in an AC system, the direction of electron emission between electrodes in a high-pressure discharge lamp switches to the opposite direction when the cycle switches between a positive half cycle and a negative half cycle, a bright spot for an arc discharge (light emission position) slightly moves when the cycle switches between the positive half cycle and the negative half cycle. This slightly varies the amount of light inputted to a digital optical element and causes a gradation disorder.

As described above, if a driving current is varied for each segment in an AC high-pressure discharge lamp, it is difficult to synchronize each color segment and the driving current. Additionally, an AC high-pressure discharge lamp has the essential problem specific to an AC system of a periodic variation in a bright spot position.

The present invention has been made in consideration of the above, and has as its main object to provide an image projection system which adopts a new synchronization method capable of, even if the magnitude of a driving current is changed for each segment, reliably synchronizing the driving current of a high-pressure discharge lamp and the color segment.

### Means for Solving the Problems

An image projection system according to the present invention is an image projection system including a DC high-pressure discharge lamp 1, a rotary color filter 3 which separates a light flux Φ1 applied from the high-pressure discharge lamp into a plurality of colors, a reflective optical element 4 which gives gradation to and performs picture signal-based modulation on a light flux Φ2 having passed through the color filter, DC lighting means 5 for driving the high-pressure discharge lamp with a direct current, a projection lens system 6 which projects a light flux Φ3 reflected by the optical element onto a screen, and a synchronization signal generating device 9 which detects rotation of the color filter and generates a synchronization signal S,
**characterized in that** the synchronization signal generating device 9 generates a synchronization signal S composed of a plurality of on-off patterns in synchronism with rotation of the color filter and outputs each of predetermined power levels (e.g., L1 to L4) corresponding one-to-one with the on-off patterns to the high-pressure discharge lamp at fixed timing.

As described above, in an embodiment of the present invention, the on-off patterns of the synchronization signal S (more specifically rectangular pulses Ts1 to Ts4 with different on times) and the power levels (L1 to L4) outputted to the high-pressure discharge lamp are set in advance to correspond one-to-one with each other. Upon receipt of the synchronization signal S with a predetermined pattern, a power level corresponding to the pattern (e.g., L1 for Ts1) is outputted to the high-pressure discharge lamp at a time for the next color segment. If the time for the output is set to be after a lapse of a fixed time T0 from the rising edge of the synchronization signal, it is possible to accurately synchronize rotation of the color filter (i.e., each color segment) and the synchronization signal.

In the present system, in order to suppress a flicker caused by an arc jump, it is preferable that the maximum value L4 of the power level is set to be not less than 1.1 times the minimum value L1 of the power level.

In the present system, electrodes of the high-pressure discharge lamp are configured such that the mass of an anode is preferably set to be larger than that of a cathode. This is because since waste in the anode (evaporation caused by heating) is more likely to occur with an increase in the maximum value (L4) of the power level, the mass of the anode set to be large in advance can make it difficult for the life of a high-pressure discharge lamp to decrease even if the ratio between the maximum value (L4) of the power level and the minimum value (L1) is made large.
The present invention is defined in claim 1.

### Advantage of the Invention

According to embodiments of the present invention, it is possible to accurately synchronize different supply powers of a high-pressure discharge lamp to be supplied to color segments. It is also possible to freely supply different power levels to color segments of a video field, suppress a flicker, and maintain a stable arc.

### Best Mode for Carrying Out the Invention

### (First Embodiment)

### -About System Configuration-

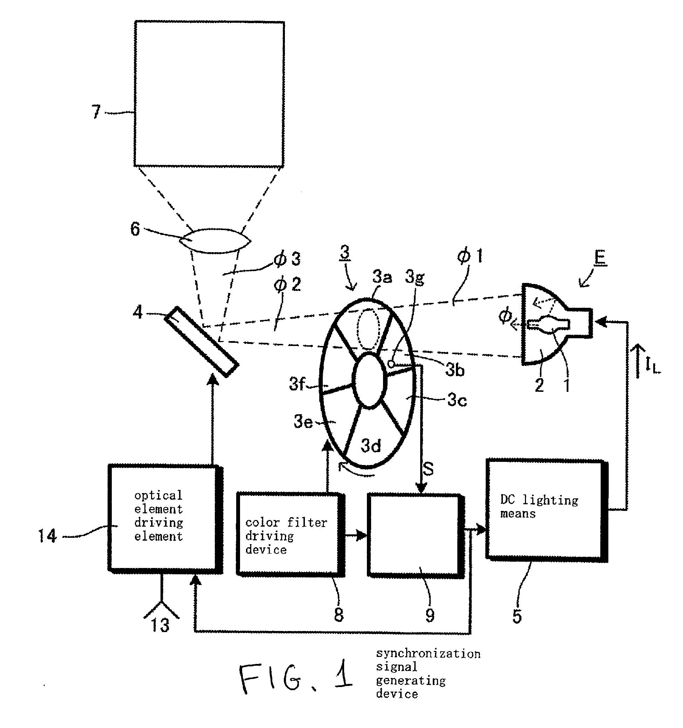

Figure 1 shows an example of a block diagram for explaining the system configuration of an image projection system according to the present invention. The system is composed of a light source E made up of a DC high-pressure discharge lamp 1 and a reflector 2, a color filter 3 including a plurality of color segments 3a to 3f, an optical element 4, and a projection lens system 6. A light flux Φ applied from the high-pressure discharge lamp 1 is directly applied or is reflected by the reflector 2. A light flux Φ1 is applied to the color filter 3. After the light flux Φ1 is optically modulated by the optical element 4, a predetermined image pattern is projected onto a screen 7 through the projection lens system 6.

The color filter 3 includes a plurality of color segments, each of which is composed of a dichroic filter having the property of selectively letting a visible wavelength pass therethrough. The color filter 3 in Figure 1 is of six colors of R, G, B, Y, M, and C (red, green, blue, yellow, magenta, and cyan) (3a to 3f).

The optical element 4 is composed of a reflective digital optical modulator such as a DMD and is a device for reflecting light fluxs Φ2 which have passed through the color segments 3a to 3f and have been separated into respective colors and performing optical modulation using a picture signal (e.g., a video signal) supplied from an optical element driving element 14.

Note that, more specifically, a DMD is an optical element (optical modulator) for giving gradation to light for each segment having passed through a color filter by giving lightness and performing picture signal-based modulation. For example, a DMD is formed by attaching a large number of mirror elements onto a semiconductor memory cell. The inclination of each mirror element is controlled by the optical element driving element 14, and a predetermined pattern can be formed by switching between passing and blocking light in each mirror element.

DC lighting means 5 incorporates a DC power supply circuit and a controlling circuit which selectively outputs one of a plurality of power levels in accordance with a synchronization signal and is a device which supplies a lamp current for turning on the high-pressure discharge lamp 1. The details of a pattern for a driving current to a high-pressure discharge lamp will be described later.

The projection lens system 6 is an optical lens for projecting a light flux Φ3 reflected by the surface of the optical element 4 onto the screen (7).

A color filter driving device 8 is a driving device for rotating the color filter 3 and functions to rotate the color filter 3 at a fixed speed. For example, in the case of a video signal whose frequency for one frame is 60 Hz (a screen changes 60 times per second), the color filter rotates at a speed which is an integral multiple of the frame frequency (e.g., twice, i.e., a frequency of 120 Hz).

The light flux Φ1 applied from the light source E is subjected to time-division color separation when it passes through the segments 3a to 3f of the color filter 3 rotating at the fixed speed. The light fluxs Φ2 separated into the respective colors are launched into the optical element (4) through a light pipe (not shown) or the like.

The color filter 3 has a positional indicator 3g for detecting timing. For example, a photo sensor detects the timing for one rotation of the color filter by sensing the positional indicator 3g and generates a timing reference signal S0. The reference signal S0 is inputted to a synchronization signal generating device 9, and a plurality of synchronization signals based on the reference signal S0 in synchronism with the color segments are inputted to the DC lighting means 5.

### -About Current Driving Pattern-

Figure 2 illustrates, on the same time base, the segment status of a color filter (the top row), a DC lamp current waveform IL (the second row), the waveform of a synchronization signal S (the third row), and the signal strength of the light flux Φ1 applied from the high-pressure discharge lamp 1, in the image projection system according to the present invention. Figure 2 shows an example in which a color filter including six segments of R, G, B, Y, M, and C (red, green, blue, yellow, magenta, and cyan) as shown in Figure 1 is rotated at a speed twice a frequency for one frame (one frame: 60 Hz, video field: 120 Hz). Note that although a spoke time may be actually set to absorb effects of the boundary between color segments, a description of transient characteristics will be omitted.

An example is shown in Figure 2 in which four types of power levels, L1, L2, L3, and L4, are set in ascending order of power level. On times for the synchronization signal S are identified with Ts1, Ts2, Ts3, and Ts4 in descending order of duration. Any one current strength of the plurality of power levels set in advance is outputted after a lapse of a fixed time T0 from the rising edge of the synchronization signal.

More specifically, the next driving current IL is set to the level L1 when a pulse width of Ts1 is detected, is set to the level L2 when a pulse width of Ts2 is detected, is set to the level L3 when a pulse width of Ts3 is detected, and is set to the level L4 when a pulse width of Ts4 is detected.

For example, Ts1 is set to be 100 µs; Ts2, 150 µs; Ts3, 200 µs; Ts4, 250 µs; and T0, 300 µs L1, L2, L3, and L4 are set in advance so as to correspond to Ts1 to Ts4. Note that a time for one segment is about 690 µs (= 1/60 Hz/4 times/6 segments) even in view of the color segments of six colors and quadruple speed. Since the magnitude of T0 (= 300 µs) is smaller than the value, the above set values are all reasonable set values.

Note that, to make fine adjustments to compensate for a color segment error, it suffices that the controlling circuit in the synchronization signal generating device 9 adjusts the timing of the synchronization signal, and the DC lighting means 5 need not be changed. Even if the angle of each color segment is changed, if the frame frequency is changed to, e.g., 50 Hz, or if the number of rotations of the color filter is changed, the timing of the synchronization signal only needs to be changed.

For example, in the example of the waveform of the DC lamp current in Figure 2(a) (the second row), the power levels are associated in ascending order of power level in the following manner:
L1 green (G);
L2, blue (B) and magenta (M);
L3, yellow (Y) and cyan (C); and
L4, red (R).

Under the above-described settings, an image with a tone exhibiting, in whole, a slightly low color temperature is obtained. An image with a tint exhibiting, in whole, a slightly high color temperature is obtained if B (blue) and R (red) are interchanged, as in, e.g., the waveform of the DC lamp current (the first row) in Figure 2(b), and the power levels are associated in the following manner:
L1, green (G);
L2, red (R) and magenta (M);
L3, yellow (Y) and cyan (C); and
L4, blue (B).

What is required for this is only to change the synchronization signal S in the manner as shown in the lower row of Figure 2(b) and replace patterns of a synchronization signal for selecting the power levels for R (red) and B (blue) with others.

As described above, the image projection system according to the present invention makes it possible to represent various tints to suit user preferences only by changing patterns of a synchronization signal. Additionally, since change of a circuit and the like of lighting means is unnecessary, the degree of freedom of system design is extremely high.

Note that, in the image projection system according to the present invention, a high-pressure discharge lamp serving as a light source uses a DC system, and polarity switching need not be considered, unlike an AC system. It is thus easy to generate a current waveform as described above in a segment next to one when a synchronization signal is received according to the type of the synchronization signal. Note that since symmetry and the like need to be considered, an AC system has many limitations. In contrast, the present system has the advantage of being able to freely arrange the power levels (L1 to L4).

Note that although, in the above embodiment, the number of color segments has been described to be 6 (RGBYMC), and the number of power levels has been described to be 4 (L1 to L4), the numbers are illustrative only. It will be appreciated that the number of segments and the number of power levels can be freely changed by changing the correspondence between a synchronization signal and power levels.

Since a high-pressure discharge lamp is driven by a DC system in the present system, an arc spot is fixed in one direction on the cathode side, and a gradation disorder is unlikely to occur. Note that it is known that superposition of a pulse current on a direct current allows suppression of an arc jump (e.g., Japanese Patent Laid-Open No. 2004-212890). The waveform of a driving current in the present system is equivalent to that of a direct current with a pulse of the same polarity superposed thereon. Accordingly, if a power level difference (L1 to L4) is set to be not less than a certain level in a video field, the effect of suppressing a flicker caused by an arc jump is expected. The effect of suppressing a flicker was experimentally confirmed when, as for the difference between a maximum value (L4) of a power level and a minimum value (L1), the ratio between the maximum value and the minimum value was not less than 1.1.

### (Second Embodiment)

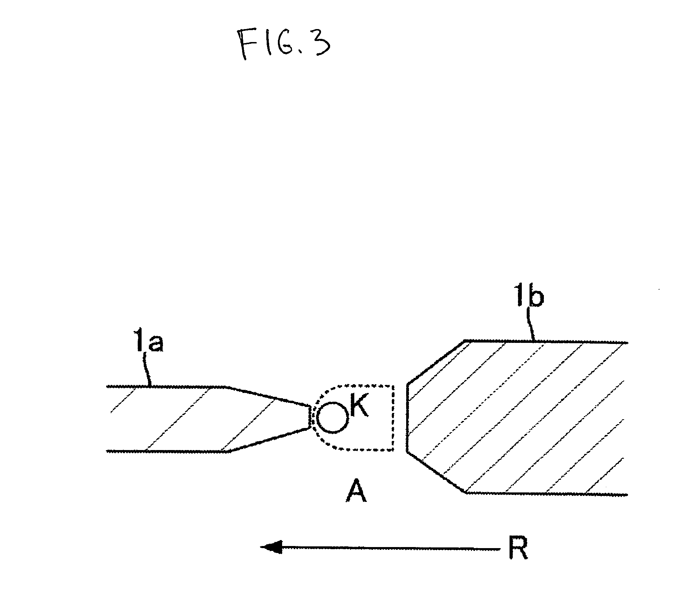

Figure 3 shows states of electrode structures 1a and 1b of a general DC high-pressure discharge lamp and an arc discharge A. As shown in Figure 3, the DC high-pressure discharge lamp illustrated in this embodiment is configured such that the mass of the anode 1b is larger than that of the cathode 1a. The ratio between the mass of an anode and that of a cathode for a DC high-pressure discharge lamp of this type is typically about 1.5 to 2. A current flows in a direction indicated by an arrow R, and the arc discharge A as in Figure 3 occurs. At this time, a bright spot K appears in the vicinity of the cathode la.

In the experiment, the mass ratio between the anode and the cathode was set to be a slightly higher value than usual, about 2.5 (2.3 to 2.7). At this time, a maximum value (L4) of a power level could be set to up to 150% of (1.5 times) a minimum value (L1). This means that a tone adjustable range is wide. Note that if the level difference is further increased, the anode side may be excessively heated, a tungsten electrode may evaporate, and the life of the discharge lamp may be decreased. Note that if the vapor pressure of the discharge lamp, the shapes of the electrodes, and the like are optimized, it may be possible to set the level difference to be slightly larger.

Note that since, in the case of an AC system, both electrodes alternately serve as an anode and a cathode, electrodes appropriately large in mass may be necessary for the maximum value (L4) of the power level to prevent life characteristics from deteriorating. However, in this case, the temperature of each electrode becomes too low while the electrode is operating as a cathode, and an arc is likely to be unstable. As described above, in the case of an AC system, since electrodes are required to have opposite properties, a power level difference cannot be made large. Accordingly, it can be said that making electrodes asymmetric as in this embodiment has a large effect only after it is applied to a DC system like the present system.

### Industrial Applicability

An image projection system according to the present invention is capable of freely supplying different power levels to color segments of a video field, a flicker caused by an arc jump is suppressed, and an arc can be stably maintained. Particularly if the mass of an anode is made larger than that of a cathode, since the level difference between a maximum value of a power level and a minimum value can be set to up to, e.g., about 150%, a range within which a tone can be changed to suit user preferences is wide. Since a DC system is used, a spot position does not vary, and no error occurs in a light flux (Φ) applied to a color filter for each video field. Accordingly, it is possible to continue to output a stable light flux.

### Brief Description of the Drawings

Figure 1 is a block diagram of the present invention;
Figure 2 is charts each showing the relationship between the waveform of a lamp current and a synchronization signal according to the present invention;
Figure 3 is a view showing an electrode structure of a high-pressure discharge lamp according to the present invention; and
Figure 4(a) is a view showing an electrode structure of a conventional AC high-pressure discharge lamp, and Figure 4(b) is a chart showing an example of the waveform of a driving current for a conventional AC image projection device.

### Description of Symbols

- IL: DC lamp current
- E: light source
- S: synchronization signal
- Φ: light (light flux)
- 1: high-pressure discharge lamp
- 2: reflector
- 3: color filter
- 3a to 3f: color segment
- 3g: positional indicator
- 4: optical element
- 5: DC lighting means
- 6: projection lens system
- 7: screen
- 8: color filter driving device
- 9: synchronization signal generating device
- 13: video input unit
- 14: optical element driving element

## Claims

1. An image projection system including a DC high-intensity discharge lamp (1), a rotary color filter (3) which separates a light flux (Φ1) applied from the high-pressure discharge lamp into a plurality of colors, a reflective optical element (4) which gives gradation to and performs picture signal-based modulation on a light flux (Φ2) having passed through the color filter, DC lighting means (5) for driving the high-pressure discharge lamp with a direct current, a projection lens system (6) which projects a light flux (Φ3) reflected by the optical element onto a screen, and a synchronization signal generating device (9) which detects rotation of the color filter and generates a synchronization signal (S),
**characterized in that** the synchronization signal generating device (9) is adapted to generate a synchronization signal (S) composed of a plurality of on-off patterns of rectangular pulses with different on times in synchronism with rotation of the color filter and outputs each of predetermined power levels (e.g., L1 to L4) corresponding one-to-one with the on-off patterns to the high-pressure discharge lamp at fixed timing for the next color segment of the rotary color filter (3).

2. The image projection system according to claim 1, **characterized in that** a maximum value (L4) of the power levels is set to be not less than 1.1 times a minimum value (L1) of the power levels.

3. The image projection system according to claim 1, **characterized in that** electrodes of the high-pressure discharge lamp are configured such that an anode is larger in mass than a cathode.

## Patentansprüche

1. Bildprojektionssystem, mit einer Gleichspannungs-Entladungslampe (1) mit hoher Intensität, einem Drehfarbfilter (3), der einen Lichtfluss (φ1), der von der Hochdruck-Entladungslampe eingegeben wird, in mehrere Farben trennt, einem reflektierenden optischen Element (4), das eine Abstufung erzeugt und eine Modulation auf Bildsignalbasis an einem Lichtfluss (φ2), der sich durch den Farbfilter bewegt hat, ausführt, Gleichspannungs-Beleuchtungsmitteln (5), um die Hochdruck-Entladungslampe mit einem Gleichstrom anzusteuern, einem Projektionslinsensystem (6), das einen Lichtfluss (φ3), der durch das optische Element reflektiert wird, auf einen Schirm projiziert, und einer Synchronisationssignal-Erzeugungsvorrichtung (9), die eine Drehung des Farbfilters detektiert und ein Synchronisationssignal (S) erzeugt,
**dadurch gekennzeichnet, dass** die Synchronisationssignal-Erzeugungsvorrichtung (9) dafür ausgelegt ist, ein Synchronisationssignal (S), das aus mehreren Ein/Aus-Mustern von Rechteckimpulsen mit unterschiedlichen Einschaltzeiten aufgebaut ist, synchron mit der Drehung des Farbfilters zu erzeugen und jeweils vorgegebene Leistungspegel (z. B. L1 bis L4), die Eins-zu-Eins den Ein/Aus-Mustern entsprechen, zu der Hochdruck-Entladungslampe mit fester Zeitvorgabe für das nächste Farbsegment des Drehfarbfilters (3) auszugeben.

2. Bildprojektionssystem nach Anspruch 1, **dadurch gekennzeichnet, dass** ein Maximalwert (L4) der Leistungspegel so eingestellt ist, dass er nicht kleiner als der 1,1-fache Minimalwert (L1) der Leistungspegel ist.

3. Bildprojektionssystem nach Anspruch 1, **dadurch gekennzeichnet, dass** Elektroden der Hochdruck-Entladungslampe in der Weise konfiguriert sind, dass eine Anode eine größere Masse besitzt als eine Katode.

## Revendications

1. Système de projection d'image comportant une lampe à décharge de haute intensité C.C. (1), un filtre chromatique rotatif (3) qui sépare un flux lumineux (φ1) appliqué par la lampe à décharge haute pression en une pluralité de couleurs, un élément optique réflecteur (4) qui produit une graduation d'un flux lumineux (φ2) ayant traversé le filtre chromatique, et effectue une modulation basée sur le signal d'image de ce flux, un moyen d'éclairage C.C. (5) pour commander la lampe à décharge haute pression avec un courant continu, un système de lentilles de projection (6) qui projette un flux lumineux (φ3) réfléchi par l'élément optique sur un écran, et un dispositif de génération de signal de synchronisation (9) qui détecte la rotation du filtre chromatique et génère un signal de synchronisation (S),
**caractérisé en ce que** le dispositif de génération de signal de synchronisation (9) est adapté pour générer un signal de synchronisation (S) composé d'une pluralité de motifs d'activation-désactivation d'impulsions carrées aux temps d^{!}activation différents en synchronisme avec la rotation du filtre chromatique et produit en sortie chacun de niveaux de puissance prédéterminés (p. ex. L1 à L4) correspondant de façon bi-univoque aux motifs d'activation et de désactivation de la lampe à décharge haute pression à un cadencement fixe pour le segment de couleur suivant du filtre chromatique rotatif (3).

2. Système de projection d'image selon la revendication 1, **caractérisé en ce qu'**une valeur maximum (L4) des niveaux de puissance est réglée pour ne pas être inférieure à 1,1 fois une valeur minimum (L1) des niveaux de puissance.

3. Système de projection d'image selon la revendication 1, **caractérisé en ce que** des électrodes de la lampe à décharge haute pression sont configurées de telle sorte qu'une anode soit d'une masse supérieure à la masse d'une cathode.
